# EUROPEAN PATENT APPLICATION

(11) **EP 1 172 899 A1**
(43) Date of publication of application: **16.01.2002**
(21) Application number: 01116352.4
(22) Date of filing: 05.07.2001
(51) Int. Cl.: H01R 13/629

(54) **Connector device for card with detection switch for detecting fitting of card**

(30) Priority: 10.07.2000 JP 2000213388
(71) Applicant: ALPS ELECTRIC CO., LTD., Tokyo 145-8501 (JP)
(72) Inventor: Nishioka, Toru, Otsuka-cho, Ota-ku, Tokyo 145-8501 (JP)
(74) Representative: Klunker . Schmitt-Nilson . Hirsch

(57) **Abstract**

According to the present invention, in a structure of a connector device for card having a lock-detecting mechanism of a card, a connector device for card capable of surely detecting that the card is locked with a simple structure without increasing the number of parts newly is provided. The connector device for card comprises: a slide member 6 for engaging with a card 4 attached to and detached from a housing 1 to be able to slide in a direction of inserting and discharging the card 4; a return spring 3 for biasing the slide member 6 in the direction of discharging the card 4; a lock member 5 for holding the slide member 6 against biasing force of the return spring 3 at a position where the card is fitted; and a push rod 8 arranged to be able to shift between a standby position and a pushed position for unlocking the lock of the lock member 5 by pressing manipulation to shift the slide member 6 to a discharge position of the card, wherein a switch member 10 is provided in the housing 1, the switch member 10 being operated in accordance with engagement/disengagement of the slide member 6 and the lock member 5 and detecting that the card is held at the fit position by engaging with the lock member 5.

## Description

### BACKGROUND OF THE INVENTION

### FIELD OF THE INVENTION

The present invention relates to a structure of a connector device for card used in an IC card used in a memory medium such as a personal computer, or used in CF(Compact Flash) card used in an electronic equipment such as a digital camera.

### DESCRIPTION OF THE RELATED ART

Connector devices for IC card are generally used as a recording device additionally installed to a personal computer and the like. As a memory medium of the connector device for IC card, IC card has been used widely.

The IC card is fitted into the connector device for IC card to carry out write and read of necessary information, and there is a connector device for IC card in which when the IC card is fitted, in order to properly and accurately carry out the write to and the read from the IC card, it is detected that the IC card is locked at the fit position and then the write and the read of data is carried out.

There is known as a conventional lock-detecting mechanism of IC card, in which a detection switch is provided in a housing comprising: a slide member for carrying the IC card, a lock member for holding the slide member at the fit position of the IC card, a push rod for unlocking the lock member, and a spring member for biasing the slide member in the discharge direction when the lock member is unlocked, and when the IC card is inserted into the housing and is locked at the fit position, the detection switch is pushed by the fitted IC card and thus it is detected that the IC card is locked at the fit position.

However, in the structure of the conventional connector device for IC card described above, the lock detection of IC card is carried out by pressing the detection switch with the IC card. However, it is difficult to adjust positions where the detection switch is ON/OFF and a position where the IC card is locked, and there occurs situations that in spite of ON of the detection switch, the IC card is not yet locked or in spite of lock of the IC card, the detection switch is not yet ON, so that the write or the read of data to or from the IC card cannot be carried out properly and accurately.

Therefore, the present invention is made in order to solve the above problems and the object of the present invention is to provide a connector device for card surely detecting that the card to be locked with a simple structure without increasing the number of parts newly in the structure of connector device for card having a lock- detecting mechanism of card.

### SUMMARY OF THE INVENTION

As a first means for solving the above problems according to the present invention, a connector device for card, comprising: a slide member for engaging with a card attached to and detached from a housing to be able to slide in a direction of inserting and discharging the card; a return spring for biasing said slide member in the direction of discharging said card; a lock member for holding said slide member against biasing force of said return spring at a position where the card is fitted; and a push rod arranged to be able to shift between a standby position and a pushed position for unlocking the lock of said lock member by pressing manipulation to shift said slide member to a discharge position of the card, wherein a switch member is provided in said housing, the switch member being operated in accordance with engagement /disengagement of said slide member and said lock member and detecting that the card is held at the fit position by engaging with said lock member.

Also, as a second means according to the present invention, said lock member comprises a biasing member supported in said housing to be able to turn for biasing said lock member in a direction that said lock member engages with said slide member, and said push rod is provided with a holding projection portion for holding said lock member against the biasing force of the biasing member at a position where said lock member disengages from said slide member until said slide member is shifted to the fit position of the card, and a recessed portion for shifting said lock member to a position where said lock member engages with said slide member when said slide member was shifted to the fit position of the card.

Also, as a third means according to the present invention, said push rod is provided with an engagement piece portion abutting against said slide member, so that when said slide member is shifted to the fit position of the card, said holding projection portion disengages from said lock member by pressing said engagement piece portion.

Also, as a fourth means according to the present invention, a lock piece for engaging with and disengaging from said slide member by turning and a switch-manipulation piece for operating said switch member are integrally formed in said lock member.

### BRIEF DESCRIPTION OF THE DRAWINGS

The above objects, other objects, features and advantages of the present invention will be better understood from the following description taken in conjunction with the accompanying drawings, in which:
FIG. 1 is a plan view showing a connector device for card according to an embodiment of the present invention;
FIG. 2 is a plan view showing the connector device for card according to an embodiment of the present invention in a state that a cover is removed;
FIG. 3 is a plan view showing a lock member according to an embodiment of present invention;
FIG. 4 is a side view showing the lock member according an embodiment of the present invention;
FIG. 5 is a plan view showing a push rod according to an embodiment of the present invention;
FIG. 6 is a side view showing the push rod according to an embodiment of the present invention;
FIG. 7 is a plan view showing a switch member according to an embodiment of the present invention;
FIG. 8 is a side view showing the switch member according to an embodiment of the present invention;
FIG. 9 is an explanatory view showing a state that a switch member is OFF according to the present invention;
FIG. 10 is an explanatory view showing a state that the switch member is ON according to the present invention;
FIG. 11 is a relation view showing an initial state of the push rod and the slide member according to the present invention;
FIG. 12 is a relation view showing a state that the. push rod and the slide member engage with each other according to the present invention;
FIG. 13 is an explanatory view showing an initial state that a card is inserted into a housing according to the present invention;
FIG. 14 is an explanatory view showing a state in the case of inserting the card according to the present invention;
FIG. 15 is an explanatory view showing a state that the push rod and the slide member engage with each other during inserting the card according to the present invention;
FIG. 16 is an explanatory view showing a state right before that a holding of the push rod and the lock member disengage from each other by shifting the push rod according to the present invention;
FIG. 17 is an explanatory view showing a state that the slide member and the lock member engage with each other to be locked according to the present invention;
FIG. 18 is an explanatory view showing a state that the push rod is pressed to unlock the lock of slide member according to the present invention;
FIG. 19 is an explanatory view showing a state that an unlocked slide member is returned and the card is being discharged; and
FIG. 20 is an explanatory view showing a state that the push rod is returned to an initial position by return of the slide member during discharge of the card.

### DETAILED DESCRIPTION OF THE PREFERRED EMBODIMENT

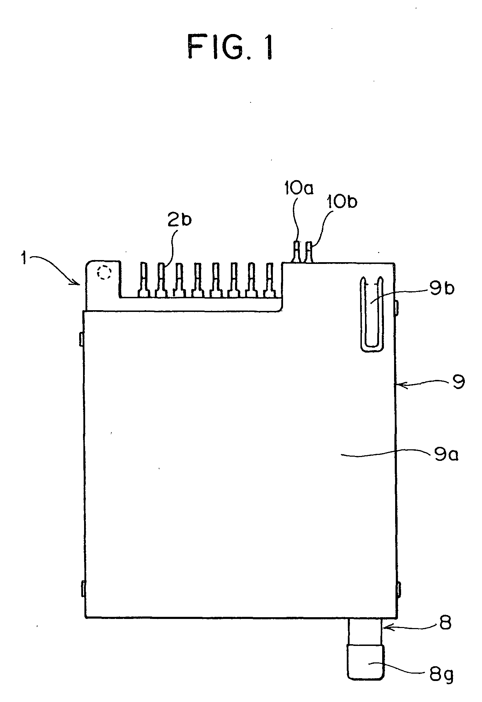

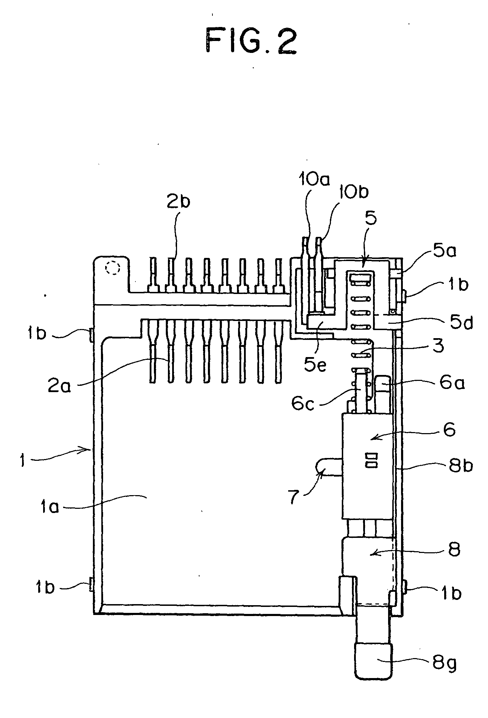

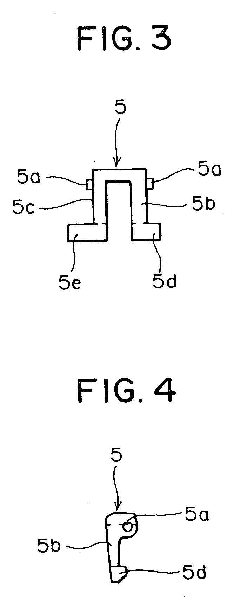

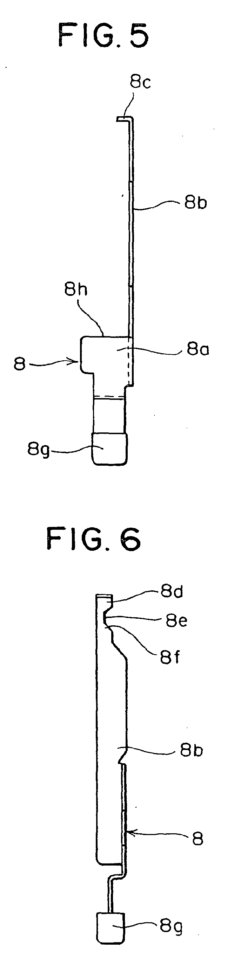

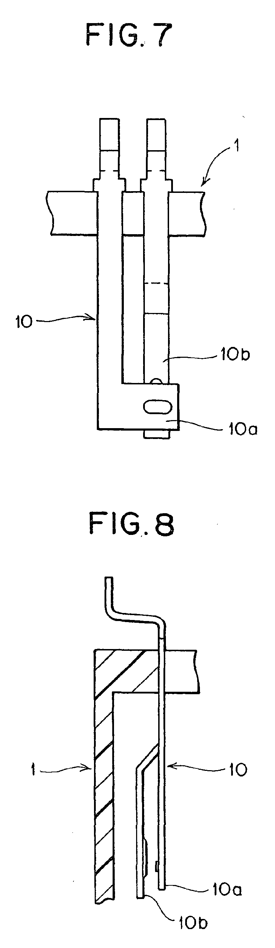

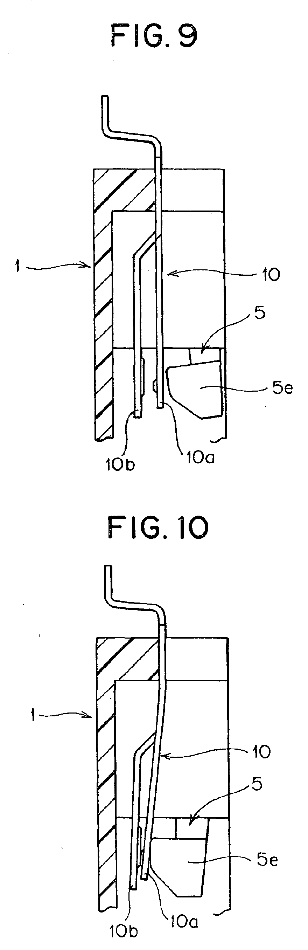

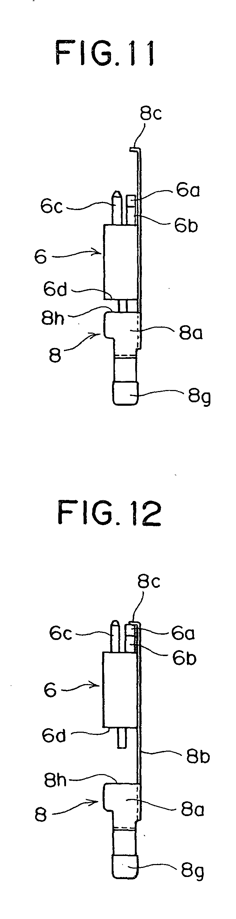

Now, an embodiment of the present invention will be explained based on examples with reference to Figs. 1 to 20. FIG. 1 is a plan view showing a connector device for card, FIG. 2 is a plan view of the connector device for card in a state that a cover is removed, FIG. 3 is a plan view of a lock member, FIG. 4 is a side view of the lock member, FIG. 5 is a plan view of a push rod, FIG. 6 is a side view of the push rod, FIG. 7 is a plan view of a switch member, FIG. 8 is a side view of the switch member, FIG. 9 is an explanatory view of a state that a switch member is OFF, FIG. 10 is an explanatory view of a state that the switch member is ON, FIG. 11 is a relation view of an initial state of the push rod and the slide member, and FIG. 12 is a relation view of a state that the push rod and the slide member engage with each other.

In the drawings, a housing 1 is formed in an approximately square shape made of insulating material such as synthetic resins and the like and is provided with a receiving portion 1a in which a card 4 to be described later is inserted and received therein. A plurality of contact terminals 2a made of conductive metal are arranged on inner bottom portion of the receiving portion 1a and one end of the contact terminals 2a are deduced toward the outside of the housing 1 and are formed with connection terminals 2b to be connected to circuit patterns of the external circuit plate and the like not shown.

Also, on the surrounding surface portion of the housing 1, a plurality of engagement claw portion 1b for engaging with a cover 9 to be described later are provided.

On one end of the housing 1, an ejector mechanism portion provided successively the receiving portion 1a is provided and a slide member 6 to be described later is arranged in the ejector mechanism portion to be able to slide, biased by a return spring 3. Also, on the upper end of the ejector mechanism portion, a lock member 5 to be described later is fixed to be able to turn, and on the right side, a push rod 8 to be described later is guided to be able to slide.

Also, a switch member 10 to be described later is attached to the ejector mechanism portion.

The card 4 in which integrated circuit (IC) is received is widely used as a recording medium. On the bottom surface side of the card 4, a plurality of contacts (not shown) are formed at one end thereof, and by getting contact with a plurality of contact terminals 2a provided in the receiving portion 1a of the housing 1, various information processing with electronic equipments which are connected to the outside can be carried out.

Also, one side of the card 4 is provided with a concave portion 4a for engaging with a second arm portion 7b of an eject arm 7 to be described later.

The lock member 5 is formed in an approximately U-shape made of insulating material such as synthetic resins and the like, and in the base portion of the lock member 5, a pair of fixing axes 5a fixed to the housing 1 are provided. Also, in the base portion, a lock piece 5b facing parallel each other and extended and a switch manipulating piece 5c are formed and at the front end of the lock piece 5b, a fixing portion 5d having a hook shape to be able to engage with and disengage from the slide member 6 to be described later is formed. The push rod 8 to be described later abuts against the fixing portion 5d, so that the lock piece 5b turns about the fixing axes 5a as a supporting point.

Also, at the front end of the switch manipulating piece 5c, a driving portion 5e for carrying out open and close of the switch by pressing a movable contact 10a of a switch member 10 to be described later is formed. The lock piece 5b and the switch manipulating piece 5c turn integrally about the fixing axes 5a as a supporting point of the lock member 5.

In this case, the turning direction of the lock member 5 is arranged to be able to turn in a direction perpendicular (up and down direction) to the flat surface of the card 4 attached to and detached from the housing 1.

Because the lock piece 5b for engaging with and disengaging from the slide member 6 to be described later by turning and the switch manipulating piece 5c for operating the switch member 10 to be described later by turning together with the lock piece 5b are formed in the lock member 5 as one body, it is possible to form the locking mechanism of the slide member 6 and the driving mechanism of the switch member 10 with one part, thereby to accomplish reduction of parts and improvement of assembling.

The slide member 6 is made of insulating materials such as synthetic resins and the like and on one end of the slide member 6, an engagement arm portion 6b having an engagement projection portion 6a engaging with the fixing portion 5d of the lock member 5 is provided. Also, a spring fixing portion 6c with which one end of the return spring 3 fixed to the housing 1 is fixed is formed side by side with the engagement arm portion 6b. On the other end opposite to the spring fixing portion 6c, a stopper surface 6d consisting of a wide plane abutting against a stopper portion 8h of the push rod 8 to be described later is formed.

Also, an opening is formed approximately at the center of the slide member 6, and at the center of the opening, the eject arm 7 to be described later is attached to be able to turn.

The slide member 6 is arranged in the housing 1 to be biased to the return spring 3 and is attached to be able to shift in the up and down direction in the housing 1, that is, in the inserting and discharging direction of the card 4.

The eject arm 7 is formed in an approximately U-shape made of insulating materials such as synthetic resins and the like, and in the eject arm 7, a first and a second arm portions 7a, 7b extended to the outside from the base portion are formed. The first arm portion 7a is provided to engage with the front end of the card 4 in inserting the card 4. Also, the second arm portion 7b which the shape of front end is an approximately arc-shape is formed and engages with the concave portion 4a formed at one side of the card 4 to engage with and disengage from the concave portion 4a while turning in the concave portion 4a.

The push rod 8 is formed by bending metal plate having a sheet shape and consists of a base plate portion 8a having a square shape and a side plate portion 8b having a sheet shape bended at right-angle and extended elongately from one end of the base plate portion 8a.

At the extended front end of the side plate portion 8b, an engagement piece portion 8c to be abutted against the front end of the engagement arm portion 6b of the slide member 6 and to be shifted in accordance with shift of the slide member 6 is formed. Also, a holding projection portion 8d having a convex shape for holding the lock piece 5b of the lock member 5 at a position where the lock piece 5b disengages from the engagement projection portion 6a of the slide member 6 while the slide member 6 is shifted to the fit position of the card, is formed and a recessed portion 8e extending from the holding projection portion 8d and having a concave shape for shifting the lock piece 5b to a position where the lock piece 5b engages with the engagement projection portion 6a when the slide member 6 is shifted to the fit position of the card, is formed. Also, a release manipulating portion 8f extending from the recessed portion 8e and formed of sloped surface is formed, and by abutting the release operating portion 8f against the fixing portion 5d of the lock piece 5b, the lock piece 5b turns about the fixing axes 5a as a supporting point.

Because the holding projection portion 8d and the recessed portion 8e which regulate turning of the lock piece 5b by engaging with or disengaging from the lock piece 5b of the lock member 5 corresponding to the fit position of the card are formed in the push rod 8, it is not necessary to separately provide holding mechanism for the lock piece of the lock member 5 and simplification of the construction can be obtained and it is possible that miniaturization and cost down of the connector device can be accomplished.

Also, a push button 8g manipulated by pressing it with fingers of man is attached to the base plate portion 8a and on the side opposite to the push button 8g, a stopper portion 8h made of wide plane is provided. By abutting the stopper surface 6d of the slide member 6 against the stopper portion 8h, shift of the slide member 6 is regulated. Also, the push rod 8 is assembled into the housing 1 together with the slide member 6 and the side plate portion 8b is guided to the housing 1, so that the push rod 8 is arranged to be shifted in the housing 1.

The cover 9 is formed of metal plate material and includes a top plate portion 9a having a flat plate shape and a horizontal plate portion bended at right-angle from the top plate portion 9a and having a plurality of fixing window portion (not shown) for engaging with the engagement claw portion 1b of the housing 1. The cover 9 is attached to the top surface side of the housing 1 to cover the opening of the housing 1.

Also, a spring piece 9b formed by cutting is provided in the top plate portion 9a of the cover 9 and the spring piece 9b is abutted against the lock piece 5b of the lock member 5 to bias the fixing portion 5d toward the engagement projection portion 6a of the slide member 6.

The switch member 10 consists of a movable contact 10a and a stationary contact 10b made of a pair of conductive metal plate arranged to facing each other. In the movable contact 10a and the fixed contact 10b, one end thereof is secured to the housing 1, the other end thereof is free end and each front end thereof is arranged in a state that a predetermined gap is set. In this case, between the respective contacts, they are in states of normal open (OFF). However, from the beginning, the contacts may be in states of normal close (ON).

In the switch member 10, if the lock member 5 turns according to shift of the slide member 6, the switch manipulating piece 5c provided in the lock member 5 turns and then the driving portion 5e presses the movable contact 10a to be connected to the fixed contact 10b, so that the switch is ON state.

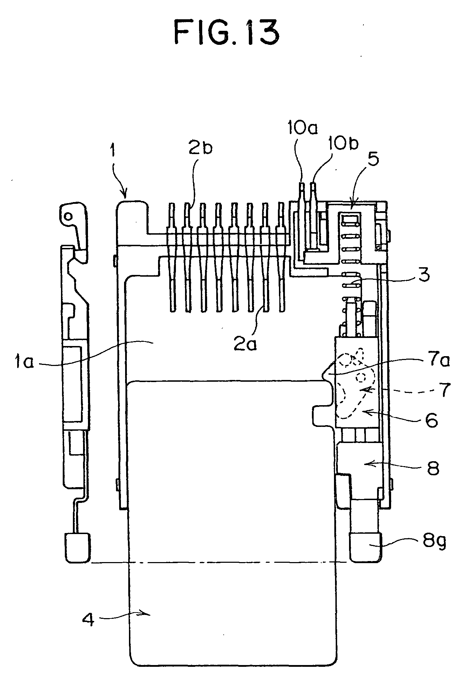

Next, the operation of the connector device for card described above will be explained with reference to FIG. 13 to FIG. 20.

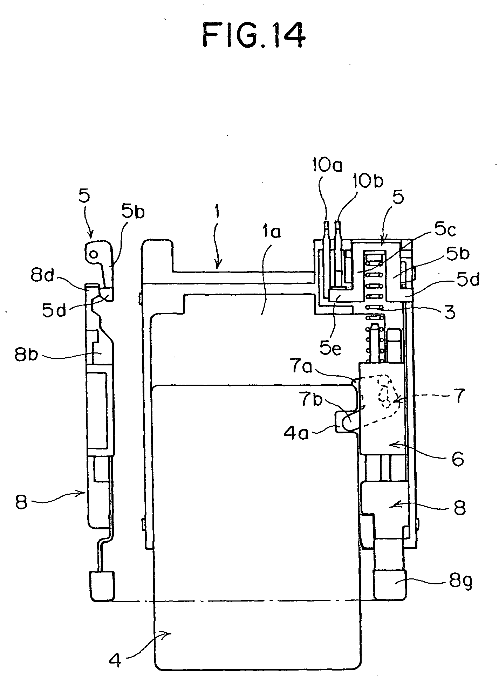

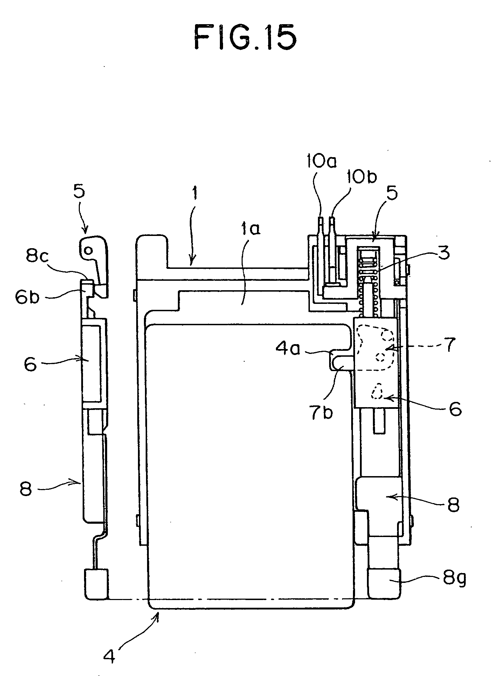

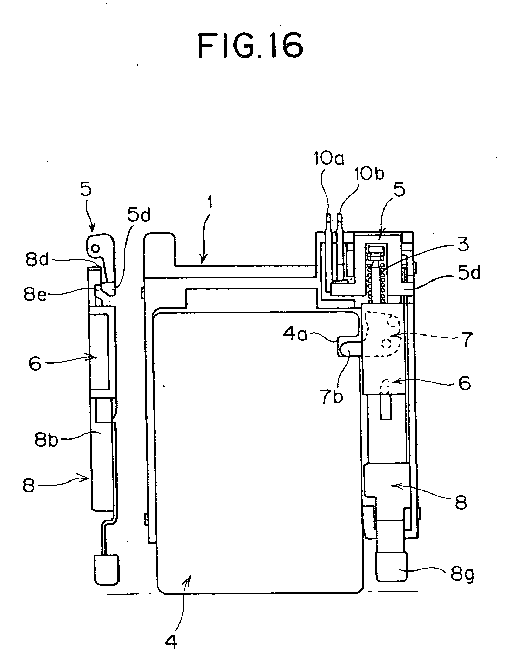

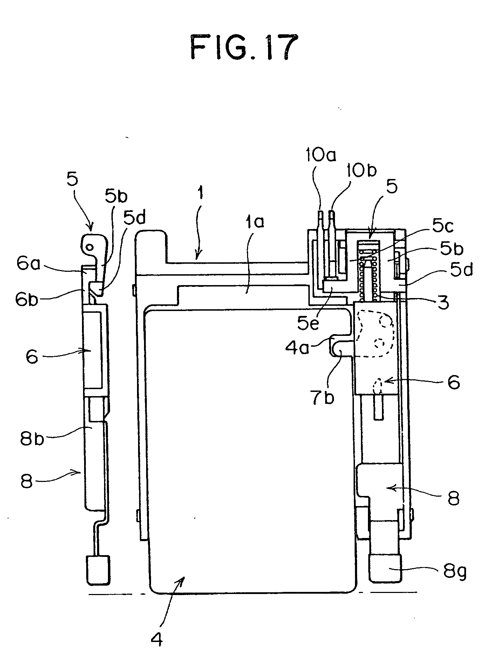

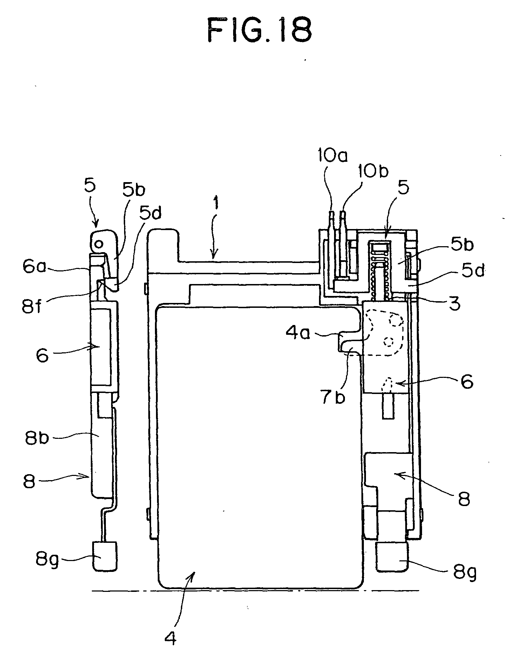

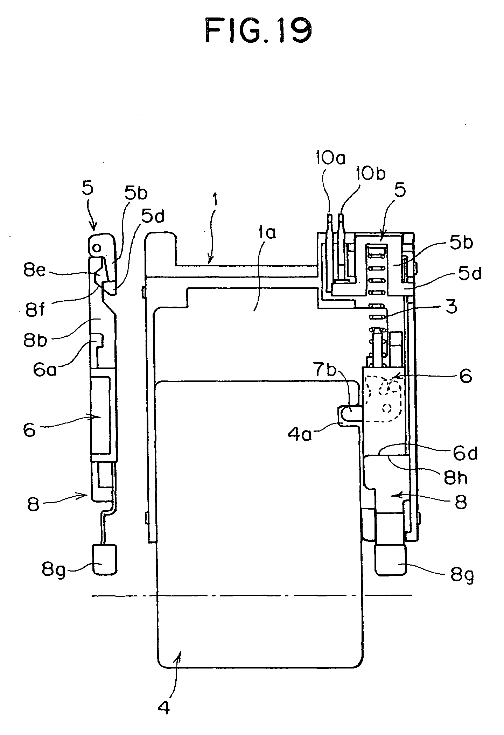

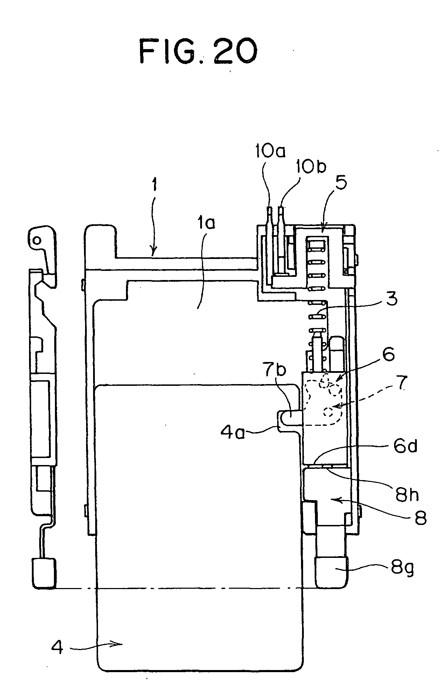

FIG. 13 to FIG. 20 are explanatory views showing operation states of the connector device for card of the present invention in insertion/discharge, FIG. 13 is an explanatory view showing an initial state that a card is inserted into the housing, FIG. 14 is an explanatory view showing a state in the case of inserting the card, FIG. 15 is an explanatory view showing a state that the push rod and the slide member engage with each other during inserting the card, FIG. 16 is an explanatory view showing a state right before that a holding of the push rod and the lock member disengage from each other, FIG. 17 is an explanatory view showing a state that the slide member and the lock member engage with each other to be locked according to the present invention, FIG. 18 is an explanatory view showing a state that the push rod is pressed to unlock the lock of the slide member, FIG. 19 is an explanatory view showing a state that the unlocked slide member is returned and the card is being discharged, and FIG. 20 is an explanatory view showing a state that the push rod is returned to an initial position by the return of the slide member when the card is being discharged.

Moreover, the above drawings show partially side views in order to facilitate understanding of the engaging/disengaging state of the lock member and the slide member, and the lock member and the push rod.

First, the card 4 is inserted into the receiving portion 1a of the housing 1. At that time, the first arm portion 7a of the eject arm 7 abuts against the front end of the card 4 and then the first arm portion 7a is pressed in the direction of insertion of the card (refer to FIG. 13).

At that time, because shift of the eject arm 7 is regulated by a cam portion (not shown) of the housing 1, the first arm portion 7a does not turn in the inserting direction of the card and the slide member 6 is shifted in the inserting direction of the card against the biasing force of the return spring 3. At that time, a cam pin (not shown) provided in the eject arm 7 is shifted along the cam wall of the cam portion provided in the housing 1, so that the eject arm 7 turns a predetermined distance in a state that the eject arm 7 is regulated in the inserting direction of the card. By means of this turn, the second arm portion 7b engages with the concave portion 4a of the card 4 (refer to FIG. 14).

In this state, the fixing portion 5d of the lock piece 5b of the lock member 5 engages with the holding projection portion 8d at the front end of the side plate portion 8b of the push rod 8, and accordingly, because the driving portion 5e of the switch manipulating piece 5c of the lock member 5 is separated from the movable contact 10a of the switch member 10, the switch member 10 is in OFF state (refer to FIG. 9).

Next, if pressing the card 4 in the inserting direction of the card 4 against the biasing force of the return spring 3, the slide member 6 is shifted in the inserting direction of the card and the contact (not shown) of the card 4 gets in contact with the contact terminal 2a of the housing 1. At that time, the front end of the engagement arm 6b of the slide member 6 is abutted against the engagement piece portion 8c at the front end of the push rod 8 (refer to FIG. 15).

Also, if pressing the card 4 in the inserting direction, the slide member 6 is shifted in the inserting direction of the card and the push rod 8 is shifted in the inserting direction of the card, so that the fixing portion 5d of the lock member 5 disengages from the holding projection portion 8d of the push rod 8 and opposes to the recessed portion 8e (refer to FIG. 16).

Because the engagement piece portion 8c which abuts against the front end of the engagement arm 6b of the slide member 6 is provided in the push rod 8 to follow the shift of the slide member 6, it is possible to properly and accurately carry out the regulation of turn of the lock member 5.

Also, if pressing the card 4 in the inserting direction of the card, the slide member 6 is shifted in the inserting direction of the card, the card 4 is subject to stop the insertion thereof at the time when the card 4 abuts against internal edge portion of the receiving portion 1a of the housing 1 and thus the fitting of the card 4 into the housing 1 is completed. Accordingly, shift of the slide member 6 and the eject arm 7 is stopped. At that time, because the lock piece 5b of the lock member 5 is biased toward the engagement arm portion 6b of the slide member 6 by the spring piece 9b provided in the cover 9 and the fixing portion 5d of the lock piece 5b is movable toward the recessed portion 8e at the time when disengaging from the holding projection portion 8d of the push rod 8, the lock member 5 turns clockwise shown in the side view. At that time, the engagement projection portion 6a engages with the fixing portion 5d of the lock member 5, so that the slide member 6 is locked at that position (refer to FIG. 17).

In this state, because the fixing portion 5d of the lock piece 5b of the lock member 5 is shifted within the recessed portion 8e of the side plate portion 8b of the push rod 8, the lock member 5 turns clockwise shown in the side view and accordingly, the driving portion 5e of the switch manipulating piece 5c of the lock member 5 presses the movable contact 10a of the switch member 10, so that the movable contact 10a and the fixed contact 10b are connected to each other to set the switch member 10 in ON state (refer to FIG. 10).

According to the above construction, when the slide member 6 is shifted to the fit position of the card according to insertion of the card, the switch manipulating piece 5c for turning according to turning of the lock piece 5b of the lock member 5 is provided in the lock member 5 for locking the slide member 6 at the fit position of the card and the switch member 10 is operated by the driving portion 5e of the switch manipulating piece 5c. Therefore, because only when the lock piece 5b locks the slide member 6, the switch member 10 can be operated, it is possible to accurately detect whether or not the card is locked at the fit position of the card.

Next, when discharging the card 4 fitted into the housing 1, if pressing the push button 8g of the push rod 8 at standby position with fingers to shift the push rod 8 to the pushed position in the inserting direction of the card in the fitting state of the card 4 (refer to FIG. 17), the lock piece 5b of the lock member 5 turns counterclockwise shown in the side views by pressing the fixing portion 5d of the lock member 5 with the release manipulation portion 8f, so that the fixing portion 5d of the lock member 5 disengages from the engagement projection portion 6a of the slide member 6 (refer to FIG. 18).

And the slide member 6 is shifted in the discharging direction of the card by biasing force of the return spring 3. At that time, because the release manipulating portion 8f of the push rod 8 is formed in the side plate portion 8b having a sheet shape extended elongately at one bended end of metal plate, it is possible to arrange them not to interrupt shift of the slide member 6.

While the slide member 6 is shifted in the discharging direction of the card, the eject arm 7 is shifted in the discharging direction of the card along with the slide member 6, keeping the turning thereof regulated. And the stopper portion 8h formed of wide plane is provided in the base plate portion 8a of the push rod 8, and at the pushed position, the stopper surface 6d provided on one end of the slide member 6 shifted in the discharging direction of the card abuts against the stopper portion 8h, so that shift of the slide member 6 surely stops and the card 4 stops at the discharging position. At that time, abutment of the contact (not shown) of the card 4 and the contact terminals 2a of the housing 1 is released (refer to FIG. 19).

In this case, because the concave portion 4a engages with the second arm portion 7b in the card 4 and turning of the eject arm 7 is regulated, it is possible to prevent the card 4 from jumping out the receiving portion 1a of the housing 1.

Next, if pressing the push rod 8 is released, the push rod 8 is returned to initial standby position by biasing force of a coil spring not shown. At that time, abutting of the stopper surface 6d of the slide member 6 and the stopper portion 8h of the push rod 8 is released, so that the slide member 6 can be shifted in the discharging direction of the card (refer to FIG. 20).

In this state, if the card 4 is extracted by fingers and the like, the slide member 6 is shifted forward against the biasing force of the coil spring not shown, so that the eject arm 7 can turn in the discharging direction of the card.

Also, corresponding to turning of the eject arm 7 in the discharging direction of the card, the second arm portion 7b disengages from the concave portion 4a of the card 4, so that the card 4 is discharged from the receiving portion 1a of the housing 1 and the slide member 6 is shifted in the inserting direction of the card by biasing force of the coil spring to be returned to the initial state (refer to FIG. 13).

According to the example of the present invention, because the switch member 10 being operated corresponding to engagement/disengagement of the slide member 6 and the lock member 5 and detecting that the card 4 is held at the fit position by engaging with the lock member 5 is provided in the housing 1 provided with the slide member 6 for engaging with the card 4 attached to and detached from the housing 1 to be able to slide in a direction where the card 4 is inserted and discharged and the lock member 5 for holding said slide member 6 at a position where the card 4 is fitted, the lock member 5 is operated only when the lock member 5 locks the slide member 6 and thus, it is possible to accurately detect that the card 4 is locked at the fit position.

As described above, the connector for card of the present invention comprises a slide member for engaging a card attached to and detached from a housing to be able to slide in a direction of inserting and discharging the card; a return spring for biasing the slide member in the direction of discharging the card; a lock member for holding the slide member against biasing force of the return spring at a position where the card is fitted; and a push rod arranged to be able to shift between a standby position and a pushed position for unlocking the lock of lock member by pressing manipulation to shift the slide member to a discharge position of the card, wherein a switch member is provided in the housing, the switch member being operated in accordance with engagement/disengagement of the slide member and the lock member and detecting that the card is held at the fit position by engaging with the lock member. Therefore, because the switch member is operated only when the lock member locks the slide member, it is possible to detect surely whether the card is locked at the fit position or not.

Also, the lock member comprises a biasing member supported in the housing to be able to turn for biasing the lock member in a direction that the lock member engages with the slide member, and the push rod is provided with a holding projection portion for holding the lock member against the biasing force of the biasing member at a position where the lock member disengages from the slide member until the slide member is shifted to the fit position of the card, and a recessed portion for shifting the lock member to a position where the lock member engages with the slide member when the slide member was shifted to the fit position of the card. Therefore, because turning of the lock member can be regulated corresponding to the fit position of the card, it is not necessary to provide separate holding mechanism for the lock piece of the lock member, so that simplification of construction can be obtained and it is possible that miniaturization and cost down of the connector device may be accomplished.

Also, the push rod is provided with an engagement piece portion abutting against the slide member, so that when the slide member is shifted to the fit position of the card, the holding projection portion disengages from the lock member by pressing the engagement piece portion. Therefore, it is possible to properly and accurately carry out the regulation of turn of the lock member.

Also, a lock piece for engaging with and disengaging from the slide member by turning and a switch-manipulating piece for operating the switch member are integrally formed in the lock member. Therefore, it is possible to form the locking mechanism of the slide member and the driving mechanism of the switch member with one part, thereby to accomplish reduction of parts and improvement of assembling.

Also, those who are skilled in the art will appreciate that various modifications, additions and substitutions are possible without departing from the scope and spirit of the present invention. Therefore, it should be understood that the present invention is limited only to the accompanying claims and the equivalents thereof, and includes the aforementioned modifications, additions and substitutions.

## Claims

1. A connector device for card, comprising:
a slide member for engaging with a card attached to and detached from a housing to be able to slide in a direction of inserting and discharging the card;
a return spring for biasing said slide member in the direction of discharging said card;
a lock member for holding said slide member against biasing force of said return spring at a position where the card is fitted; and
a push rod arranged to be able to shift between a standby position and a pushed position for unlocking the lock of said lock member by pressing manipulation to shift said slide member to a discharge position of the card,
wherein a switch member is provided in said housing, the switch member being operated in accordance with engagement/disengagement of said slide member and said lock member and detecting that the card is held at the fit position by engaging with said lock member.

2. A connector device for card according to claim 1, wherein said lock member comprises a biasing member supported in said housing to be able to turn for biasing said lock member in a direction that said lock member engages with said slide member, and
said push rod is provided with a holding projection portion for holding said lock member against the biasing force of the biasing member at a position where said lock member disengages from said slide member until said slide member is shifted to the fit position of the card, and
a recessed portion for shifting said lock member to a position where said lock member engages with said slide member when said slide member was shifted to the fit position of the card.

3. A connector device for card according to claim 1 or 2, wherein said push rod is provided with an engagement piece portion abutting against said slide member, so that when said slide member is shifted to the fit position of the card, said holding projection portion disengages from said lock member by pressing said engagement piece portion.

4. A connector device for card according to any of claims 1 to 3, wherein a lock piece for engaging with and disengaging from said slide member by turning and a switch manipulating piece for operating said switch member are integrally formed in said lock member.
